# EUROPÄISCHE PATENTSCHRIFT

(11) **EP 3 921 136 B1**
(45) Veröffentlichungstag und Bekanntmachung des Hinweises auf die Patenterteilung: **13.07.2022**
(21) Anmeldenummer: 20705910.6
(22) Anmeldetag: 13.02.2020
(51) Int. Cl.: B29C 48/90, B29C 48/09, B22F 3/105, B33Y 10/00, B33Y 30/00, B33Y 50/00, B33Y 80/00

(54) **LAMELLENBLOCK MIT SEITLICH VERSETZTEN LAMELLEN**
LAMELLA BLOCK COMPRISING LATERALLY DISPLACED LAMELLAE
BLOC DE LAMELLES COMPORTANT DES LAMELLES DÉCALÉES LATÉRALEMENT

(30) Priorität: 21.03.2019 DE 102019002022
(43) Veröffentlichungstag der Anmeldung: 15.12.2021
(73) Patentinhaber: KraussMaffei Technologies GmbH, 80997 München (DE)
(72) Erfinder: BREUNING, Walter, 85232 Bergkirchen (DE)
(74) Vertreter: Krauss, Philipp
(86) Internationale Anmeldenummer: PCT/EP2020/053698
(87) Internationale Veröffentlichungsnummer: WO 2020/187496

(56) Entgegenhaltungen:
- DE-A1-102009 016 100
- DE-B3- 10 315 125
- DE-B3-102005 002 820
- US-A1- 2003 211 657

## Beschreibung

Die Erfindung betrifft einen Lamellenblock für eine Kalibriereinrichtung zur Kalibrierung eines extrudierten Profils. Die Erfindung betrifft ferner ein Verfahren zur Herstellung eines derartigen Lamellenblocks, ein System zur additiven Fertigung eines derartigen Lamellenblocks und ein entsprechendes Computerprogramm und Datensatz.

Kalibriereinrichtungen werden zur Kalibrierung von extrudierten Endlosprofilen, wie beispielsweise Rohrprofilen, eingesetzt. Bei der Herstellung derartiger Profile wird zunächst in einem Extruder eine zur Herstellung des Profils gewünschte Kunststoffschmelze erzeugt. Die erzeugte Kunststoffschmelze wird dann durch eine Austrittsdüse des Extruders gepresst, welche die Form des Profils vorgibt. Das aus der Austrittsdüse des Extruders austretende Profil durchläuft anschließend eine Kalibriereinrichtung, welche das noch erhitzte Profil dimensionsgenau nachformt.

Eine derartige Kalibriereinrichtung zur Dimensionierung extrudierter Profile ist aus der DE 198 43 340 C2 bekannt. Dort wird eine variabel einstellbare Kalibriereinrichtung gelehrt, die zur Kalibrierung von extrudierten Kunststoffrohren mit unterschiedlichem Rohrdurchmesser ausgebildet ist. Die Kalibriereinrichtung umfasst ein Gehäuse und eine Vielzahl von im Gehäuse kreisförmig angeordneten Lamellenblöcken, deren Lamellen ineinandergreifen können. Die ineinandergreifenden Lamellenblöcke bilden einen Kalibrierkorb mit kreisförmiger Kalibrieröffnung, durch welche die zu kalibrierenden Rohre geführt werden (vgl. insbesondere die Figuren 1 und 2 der DE 198 43 340 C2). Während des Kalibriervorgangs wirkt von außen ein Unterdruck auf das Rohrprofil. Durch den Unterdruck werden die Außenwände des Rohrprofils an die Lamellen der Lamellenblöcke gesaugt. Jeder Lamellenblock ist mit einer Betätigungsvorrichtung gekoppelt, die zur individuellen radialen Verschiebung des jeweiligen Lamellenblocks vorgesehen ist. Auf diese Weise kann der Wirkquerschnitt der durch die Vielzahl der Lamellenblöcke gebildeten kreisförmigen Kalibrieröffnung je nach Bedarf entsprechend eingestellt werden.

DE 10 2009 016 100 A1 betrifft eine Kalibriervorrichtung für eine Anlage zur Extrusion von Kunststoffrohren umfassend Kalibrierwerkzeuge, die bei der Kalibrierung an der Außenwandung des Rohres anliegen, wobei eine Mehrzahl von segmentförmigen Kalibrierwerkzeugen über den Umfang des zu kalibrierenden Rohres verteilt jeweils mit Abstand ihrer Mittelpunkte zueinander angeordnet sind und jeweils eine ringförmige Anordnung bilden und wobei in Produktionsrichtung des Rohres gesehen eine Mehrzahl solcher ringförmiger Anordnungen vorgesehen sind, wobei die einzelnen Werkzeuge zweier in Längsrichtung aufeinanderfolgender ringförmiger Anordnungen jeweils in Umfangsrichtung zueinander versetzt stehen und die segmentförmigen Werkzeuge des in Längsrichtung unmittelbar folgenden Rings jeweils in die Lücke zwischen den Werkzeugen eines Rings und des übernächsten Rings eingreifen, so dass sich eine verzahnte Anordnung ergibt. Erfindungsgemäß ist vorgesehen, dass die einzelnen segmentförmigen sich in Umfangsrichtung erstreckenden Kalibrierwerkzeuge als Hohlkörper ausgebildet sind und im Bereich ihrer am Rohrumfang anliegenden Gleitflächen Schlitze aufweisen, welche mit einem Hohlraum in dem Hohlkörper in Verbindung stehen. Dadurch kann man Wasser oder Unterdruck über die Schlitze auf die Rohroberfläche geben.

DE 103 15 125 B3 betrifft eine Kalibriereinrichtung zur Kalibrierung von extrudierten Endlosprofilen, insbesondere Rohren, umfassend eine Vielzahl von aus einzelnen Segmenten bestehenden hintereinander angeordneten Segmentkränzen, deren Innenoberfläche gemeinsam eine Kalibrieröffnung bilden. DE 10 2005 002 820 B3 betrifft eine stufenlos einstellbare Kalibrierhülse für extrudierte Kunststoffrohre mit einem Einlaufkopf und zwei Bänderlagen, die sich nach Art eines Scherengitters kreuzen und an den Kreuzungspunkten gelenkig miteinander verbunden sind.

US 2003 / 211 657 A1 offenbart einen stereolithographisch gefertigten Kühlkörper. Wenn stereolithographische Verfahren verwendet werden, um das Wärmeableitungselement des Kühlkörpers herzustellen, kann das Wärmeableitungselement nichtlineare oder gewundene Durchgänge aufweisen, durch die Luft strömen kann. Da mindestens ein Teil des Kühlkörpers stereolithographisch hergestellt ist, kann dieser Teil eine Reihe übereinanderliegender, zusammenhängender, aneinander haftender Schichten aus wärmeleitendem Material aufweisen. Die Schichten können durch konsolidierte ausgewählte Bereiche einer Schicht aus nicht konsolidiertem teilchenförmigem oder pulverförmigem Material oder durch Definieren einer Objektschicht aus einer Materialschicht hergestellt werden.

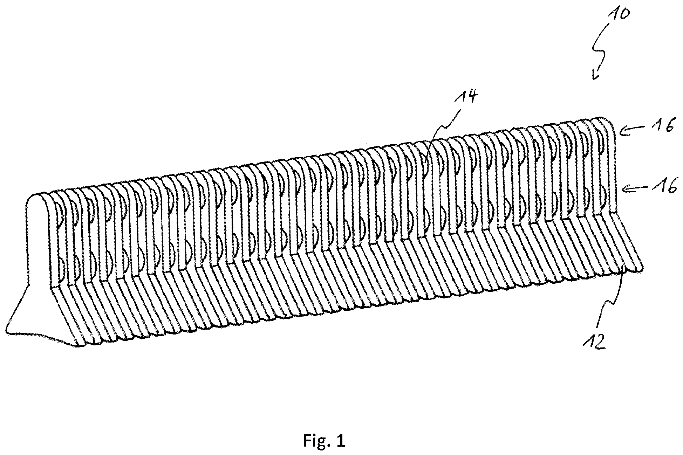

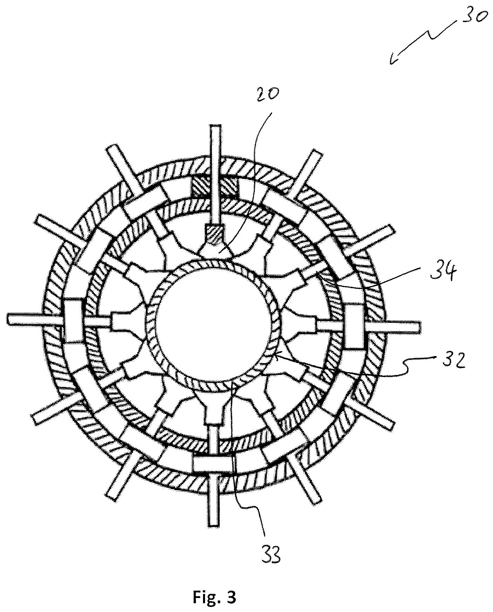

Die in der DE 198 43 340 C2 beschriebenen Lamellenblöcke bestehen jeweils aus einer Vielzahl von Lamellen, die auf zwei voneinander beabstandet angeordneten Trägerstangen aufgefädelt sind. Zur Einhaltung eines gewünschten Abstands zwischen benachbarten Lamellen kommen Abstandshülsen zum Einsatz (vgl. auch Figur 3 der DE 198 43 340 C2). Ein Beispiel eines gefädelten Lamellenblocks ist ferner in der Figur 1 gezeigt. Der in Figur 1 dargestellte Lamellenblock 10 umfasst eine Vielzahl von Lamellen 12 und Abstandshülsen 14, die abwechselnd entlang zweier Trägerstangen 16 aufgefädelt sind. Derartige gefädelte Lamellenblöcke sind aufwendig in der Fertigung und damit kostenintensiv.

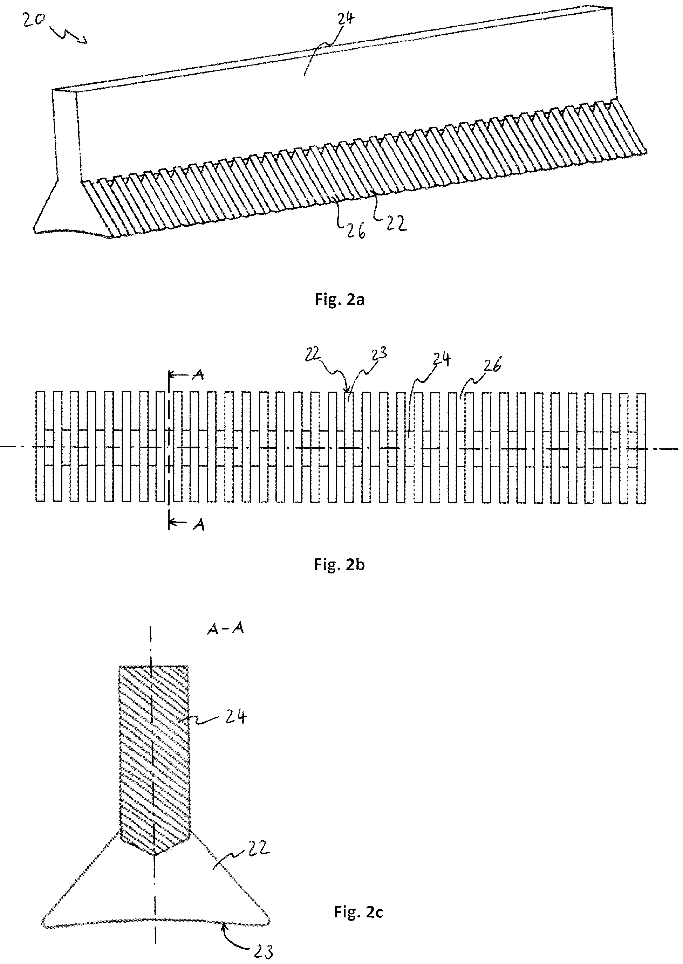

Abweichend von den oben beschriebenen gefädelten Lamellenblöcken sind ferner Lamellenblöcke mit geschlossenen Trägerstrukturen (bzw. Rückenstrukturen) bekannt. Die Figuren 2a, 2b und 2c zeigen ein Beispiel eines derartigen Lamellenblocks. Der Lamellenblock 20 umfasst eine Vielzahl von Lamellen 22, die von einer blockförmig ausgebildeten Rückenstruktur 24 getragen werden (vgl. 3D-Ansicht in Figur 2a). Die blockförmige Rückenstruktur 24 ist hierbei in der Form eines massiven Körpers (z.B. stabförmiger Körper) realisiert. Weitere Beispiele von Lamellenblöcken mit geschlossener Rückenstruktur sind aus der WO 2004/103684 A1 bekannt. Derartige Lamellenblöcke können einstückig ausgebildet sein. Sie können durch geeignete Bearbeitungsverfahren (wie beispielsweise Fräsen, Zuschneiden) aus einem Materialblock kostengünstig hergestellt werden. Denkbar ist aber auch der Einsatz eines Gussverfahrens, um den Lamellenblock 20 herzustellen.

Die Lamellen 22 des Lamellenblocks 20 sind geradlinig aufeinanderfolgend entlang der Längsrichtung der Trägerstruktur 24 angeordnet (Vgl. Figur 2b). Das heißt, Kontaktflächen 23 der einzelnen Lamellen 22, die während eines Kalibriervorganges mit der Außenfläche des zu kalibrierenden Profils in Kontakt treten, bilden an der Innenseite des Lamellenblocks 20 einen geradlinigen Verlauf. Ferner sind die Lamellen 22 des Lamellenblocks 20 gleichförmig ausgebildet und weisen quer zur Längsrichtung der Trägerstruktur 24 jeweils einen in sich symmetrischen Querschnitt auf (Vgl. Figur 2c).

In einem in eine Kalibriereinrichtung 30 eingebauten Zustand, wie exemplarisch in Figur 3 dargestellt, sind die Lamellenblöcke 20 in Umfangsrichtung bezüglich eines zu kalibrierenden Profils 33 angeordnet und bilden eine Kalibrieröffnung 32. Dabei greifen die Lamellen 22 eines jeden Lamellenblocks 20 in die Nuten 26 der jeweils benachbarten Lamellenblöcke 20 ein, sodass sich insgesamt eine ineinandergreifende Anordnung der Lamellenblöcke 20 ergibt. Der Grad des Eingriffs der Lamellenblöcke 20 ineinander kann durch Betätigungseinrichtungen 34 eingestellt werden, die jeweils mit einem Lamellenblock 20 gekoppelt sind, um die Lamellenblöcke 20 in radialer Richtung (also senkrecht zur Vorschubrichtung des zu kalibrierenden Profils 33) zu verschieben. Dadurch kann der Wirkquerschnitt der Kalibrieröffnung 32 an das zu kalibrierende Profil 33 entsprechend angepasst werden. Kalibriereinrichtungen wie die in Figur 3 dargestellte sind auch in der DE 198 43 340 C2 beschrieben.

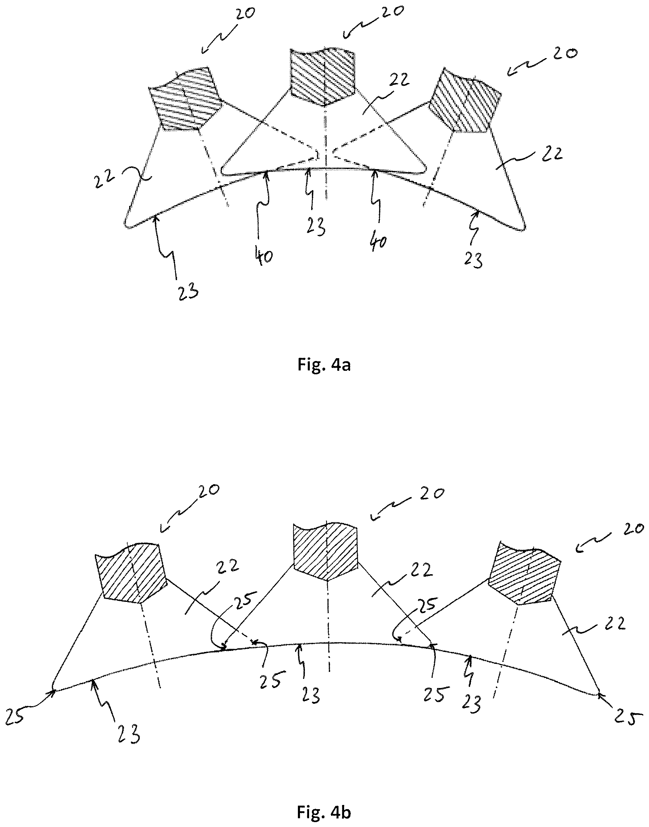

Figur 4a zeigt schematisch den Eingriff der Lamellen 22 benachbarter Lamellenblöcke 20 ineinander. Wie in der Figur 4a dargestellt, ergeben sich zwischen den Lamellenblöcken 20 jeweils Verschneidungskanten 40. Die Verschneidungskanten 40 sind Kanten in der Kontur der Kalibrieröffnung, die durch die zueinander abgewinkelten Kontaktflächen 23 benachbarter Lamellenblöcke 20 entstehen. Der Wirkquerschnitt einer Kalibrieröffnung für ein rohrförmiges Profil ist somit in der Regel nicht exakt kreisrund sondern weist eine polygonale Form auf. Je weiter die Lamellenblöcke 20 auseinandergefahren sind, desto schwächer werden die Verschneidungen 40 zwischen den Lamellenblöcken 20.

Figur 4b zeigt den Eingriff der Lamellen 22 benachbarter Lamellenblöcke 20, wobei die Lamellenblöcke 20 so weit auseinandergefahren sind, dass die gekrümmten Kontaktflächen 23 der ineinandergreifenden Lamellen einen kreisrunden Wirkquerschnitt der Kalibrieröffnung - im Wesentlichen ohne Verschneidungskanten -bilden. Die Lamellen 22 weisen in der dargestellten Konstellation nur noch einen geringen Eingriff in die Nuten der benachbarten Lamellenblöcke 20 auf, wobei seitliche Lamellenenden 25 einer jeden Lamelle im Wesentlichen bündig mit der Kontaktfläche 23 der Lamellen 22 des jeweils benachbarten Lamellenblocks abschließen. Durch den Unterdruck, der während des Kalibriervorganges von außen auf das zu kalibrierende Profil wirkt, wird die Außenwand des Profils leicht in die Nuten der Lamellenblöcke 20 gedrückt (bzw. gesaugt). An den Stellen, an denen die seitlichen Lamellenenden 25 der Lamellen 22 in die Nuten hineinragen, entstehen Abzeichnungen an der Oberfläche der Profilaußenwand.

Beim Vorschub eines zu kalibrierenden Profils durch die Kalibrieröffnung 32 einer Kalibriereinrichtung 30 erzeugen die Abzeichnungen Spuren auf der Oberfläche des zu kalibrierenden Profils. Bei der Kalibrierung zylindrischer Profile (z.B. Rohrprofile) wird der Kalibrierkorb daher während der Kalibrierung rotiert, selbst wenn die Kalibrieröffnung so weit geöffnet ist, dass sie keine Verschneidungskanten 40 bildet. Durch die Rotation werden die an der Oberfläche des Profils erzeugten Spuren weitestgehend eliminiert. Die Rotation des Kalibrierkorbes erfordert jedoch eine aufwändige und kostenintensive Konstruktion der Kalibriereinrichtung. Der Kalibrierkorb muss geeignet gelagert und angetrieben werden. Die vielen beweglichen Teile einer solchen Konstruktion machen ferner eine Umhausung des Kalibrierkorbes erforderlich, um das Gefahrenpotential einzuschränken.

Aufgabe der vorliegenden Erfindung ist es, Lamellenblöcke für eine Kalibriereinrichtung bereitzustellen, welche die im Zusammenhang mit dem Stand der Technik aufgezeigten Probleme reduzieren bzw. beseitigen. Insbesondere soll durch die vorliegende Erfindung ein rotationsfreies Kalibrieren zylindrischer Profile ermöglicht werden, wobei eine hohe Oberflächengüte der Profile erzielt wird.

Zur Lösung der oben genannten Aufgabe wird gemäß einem Aspekt der Erfindung ein Lamellenblock für eine Kalibriereinrichtung zur Kalibrierung eines extrudierten Profils bereitgestellt. Der Lamellenblock umfasst eine Trägerstruktur und eine Lamellenstruktur. Die Lamellenstruktur weist eine Vielzahl von Lamellen auf, die durch Nuten voneinander beabstandet und in Längsrichtung der Trägerstruktur angeordnet sind, wobei benachbarte Lamellen in Längsrichtung seitlich zueinander versetzt angeordnet sind.

Das extrudierte Profil kann ein Kunststoffprofil sein. Das extrudierte Kunststoffprofil kann ein Endlosprofil sein. Insbesondere kann das Kunststoffprofil ein Rohrprofil sein. Durch den Versatz der Lamellen zueinander ergibt sich eine in Längsrichtung gefächerte Anordnung der Lamellen. Wenn der Lamellenblock in eine Kalibriereinrichtung eingebaut ist, entspricht die Längsrichtung der Trägerstruktur der Extrusionsrichtung (der Vorschubrichtung) des zu kalibrierenden (extrudierten) Profils.

Jede Lamelle weist an einer Innenseite des Lamellenblocks eine Kontaktfläche auf. Durch den Versatz der Lamellen zueinander beschreiben die Lamellen bzw. die Kontaktflächen der Lamellen bezüglich der Längsrichtung der Trägerstruktur einen diagonalen oder wellenförmigen Verlauf. Die Innenseite des Lamellenblocks ist die der Trägerstruktur abgewandte Seite der Lamellenstruktur. Mit den Kontaktflächen der Lamellen sind jene Flächen gemeint, die in einem in eine Kalibriereinrichtung eingebauten Zustand die Kalibrieröffnung bilden, und die mit der Außenfläche des zu kalibrierenden Profils in Kontakt kommen. Die Anordnung der Kontaktflächen der Lamellen entlang der Längsrichtung der Trägerstruktur kann auch einem zickzackförmigen oder anderweitigen Verlauf folgen.

Jede Lamelle kann quer zur Längsrichtung der Trägerstruktur einen Querschnitt aufweisen, wobei die Querschnitte wenigstens einiger der Lamellen in sich asymmetrisch sind. Die Asymmetrie der Lamellenquerschnitte bezieht sich auf eine Symmetrieebene des Lamellenblocks, die senkrecht zu den Kontaktflächen der Lamellen und in Längsrichtung mittig durch die Trägerstruktur verläuft. Es versteht sich, dass die Kontaktflächen in sich asymmetrischer Lamellen vorzugsweise ebenfalls asymmetrisch bezüglich der Symmetrieebene sein können.

In einem in eine Kalibriereinrichtung eingebauten Zustand kann die Längsrichtung der Trägerstruktur der Vorschubrichtung des extrudierten (zu kalibrierenden) Profils entsprechen. Mit anderen Worten verläuft die Trägerstruktur eines jeden Lamellenblocks einer Kalibriereinrichtung parallel zu einer Mittelachse der Kalibriereinrichtung.

Die Trägerstruktur und die Lamellen können aus demselben Material oder aus verschiedenen Materialien gefertigt sein. Insbesondere können die Trägerstruktur und/oder die Lamellen aus einem metallischen Werkstoff oder einem Polymerwerkstoff gebildet sein. Die Trägerstruktur und die Lamellenstruktur können als ein einstückiges Bauteil ausgebildet sein. Alternativ kann die Trägerstruktur wenigstens eine Trägerstange umfassen, entlang welcher die einzelnen Lamellen des Lamellenblocks in Längsrichtung aufgefädelt sind.

Der Lamellenblock kann mittels 3D-Druck hergestellt sein. Alternativ kann der Lamellenblock beispielsweise durch Fräsen, Bohren, Schneiden oder mittels eines Gussverfahrens hergestellt sein.

Gemäß einem weiteren Aspekt der Erfindung wird eine Kalibriereinrichtung zur Kalibrierung von extrudierten Profilen bereitgestellt. Die Kalibriereinrichtung umfasst eine Vielzahl der erfindungsgemäßen Lamellenblöcke, wobei die Lamellenblöcke zur Bildung einer Kalibrieröffnung zueinander angeordnet sind. Die Kalibrieröffnung kann im Wesentlichen einer Außenkontur des zu kalibrierenden (extrudierten) Profils entsprechen.

Die Kalibriereinrichtung kann eine Vielzahl von Betätigungseinrichtungen umfassen, wobei jede Betätigungseinrichtung jeweils mit einem Lamellenblock gekoppelt ist, um einen jeden Lamellenblock individuell zu betätigen.

Gemäß einem weiteren Aspekt der vorliegenden Erfindung wird ein Verfahren zum Herstellen eines erfindungsgemäßen Lamellenblocks bereitgestellt. Das Verfahren zum Herstellen des Lamellenblocks umfasst wenigstens den Schritt des Herstellens des Lamellenblocks mittels 3D-Druck oder mittels additiver Fertigungsverfahren. Die Herstellung des Lamellenblocks mittels 3D-Druckverfahren oder additiver Fertigungsverfahren kann hierbei ein schichtweises Lasersintern oder Laserschmelzen von Materialschichten umfassen, wobei die Materialschichten entsprechend der zu erzeugenden Form des Lamellenblocks nacheinander (sequentiell) aufgetragen werden.

Das Verfahren kann ferner den Schritt des Berechnens einer Lamellenblockgeometrie (CAD-Daten) umfassen und optional das Umwandeln der 3D-Geometriedaten in entsprechende Steuerbefehle für den 3D-Druck oder die additive Fertigung.

Das Verfahren kann ein Herstellen des Lamellenblocks als einstückiges Bauteil umfassen. Es versteht sich jedoch, dass gemäß einer alternativen Variante das Verfahren ein Herstellen jeder Lamelle einzeln (z.B. mit jeweils einem anliegenden Stegelement) und das Auffädeln der Lamellen entlang wenigstens einer Trägerstange in Längsrichtung des Lamellenblocks umfassen kann.

Gemäß einem weiteren Aspekt wird ein Verfahren zum Herstellen eines Lamellenblocks bereitgestellt, das die Schritte umfasst: Erstellen eines Datensatzes, welcher den wie oben beschriebenen Lamellenblock abbildet; und Speichern des Datensatzes auf einer Speichervorrichtung oder einem Server. Das Verfahren kann ferner umfassen: Eingeben des Datensatzes in eine Verarbeitungsvorrichtung oder einen Computer, welche/r eine Vorrichtung zur additiven Fertigung derart ansteuert, dass diese den im Datensatz abgebildeten Lamellenblock fertigt.

Gemäß einem weiteren Aspekt wird ein System zur additiven Fertigung eines Lamellenblocks bereitgestellt, mit einer Datensatzerzeugungsvorrichtung zum Erzeugen eines Datensatzes, welcher den wie oben beschriebenen Lamellenblock abbildet, einer Speichervorrichtung zum Speichern des Datensatzes und einer Verarbeitungsvorrichtung zum Empfangen des Datensatzes und zum derartigen Ansteuern einer Vorrichtung zur additiven Fertigung, dass diese den im Datensatz abgebildeten Lamellenblock fertigt. Die Speichervorrichtung kann ein USB-Stick, eine CD-ROM, eine DVD, eine Speicherkarte oder eine Festplatte sein. Die Verarbeitungsvorrichtung kann ein Computer, ein Server oder ein Prozessor sein.

Gemäß einem weiteren Aspekt wird ein Computerprogramm bzw. Computerprogrammprodukt bereitgestellt, umfassend Datensätze, die bei dem Einlesen der Datensätze durch eine Verarbeitungsvorrichtung oder einen Computer diese/n veranlasst, eine Vorrichtung zur additiven Fertigung derart anzusteuern, dass die Vorrichtung zur additiven Fertigung den wie oben beschriebenen Lamellenblock fertigt.

Gemäß einem weiteren Aspekt wird ein computerlesbarer Datenträger bereitgestellt, auf dem das vorstehend beschriebene Computerprogramm gespeichert ist. Der computerlesbare Datenträger kann ein USB-Stick, eine CD-ROM, eine DVD, eine Speicherkarte oder eine Festplatte sein.

Gemäß einem weiteren Aspekt wird ein Datensatz bereitgestellt, welcher den wie oben beschriebenen Lamellenblock abbildet. Der Datensatz kann auf einem computerlesebaren Datenträger gespeichert sein.

Weitere Vorteile, Einzelheiten und Aspekte der vorliegenden Erfindung werden anhand der nachfolgenden Zeichnungen erläutert. Es zeigen:
- Fig. 1: eine 3D-Ansicht eines Lamellenblocks für eine Kalibriereinrichtung gemäß dem Stand der Technik;
- Fign. 2a-2c: Ansichten eines weiteren Lamellenblocks für eine Kalibriereinrichtung gemäß dem Stand der Technik;
- Fig. 3: eine Kalibriereinrichtung gemäß dem Stand der Technik;
- Fign. 4a-4b: schematische Ansichten mehrerer ineinandergreifender Lamellenblöcke;
- Fign. 5a-5c: Ansichten eines Lamellenblocks gemäß der vorliegenden Erfindung;
- Fig. 6: eine Ansicht eines weiteren Lamellenblocks gemäß der vorliegenden Erfindung;
- Fig. 7: eine Ansicht noch eines weiteren Lamellenblocks gemäß der vorliegenden Erfindung; und
- Fig. 8: ein Flussdiagram eines Verfahrens zur Herstellung eines erfindungs-gemäßen Lamellenblocks.

Die Figuren 1 bis 4b wurden bereits im Zusammenhang mit dem Stand der Technik eingangs diskutiert. Es sei auf die dortige Beschreibung verwiesen.

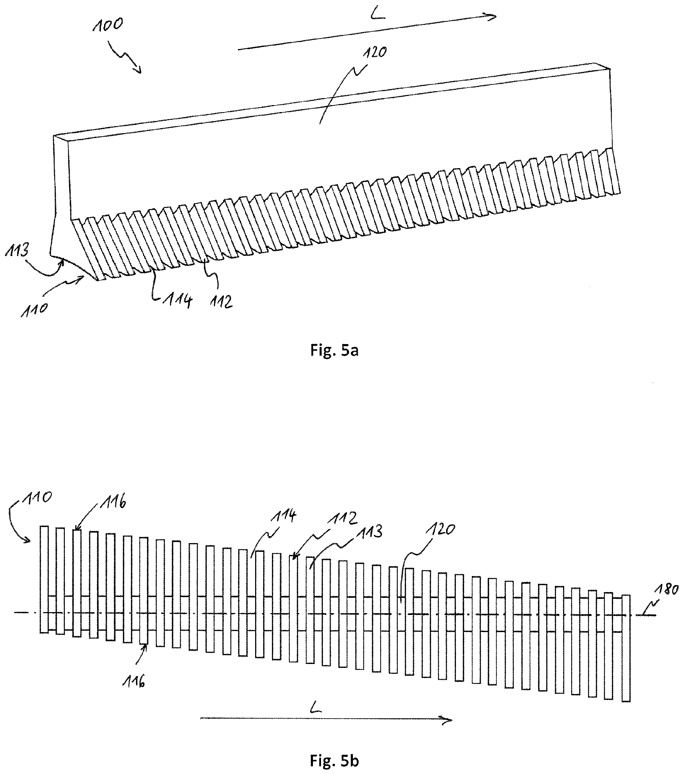

Im Zusammenhang mit den Figuren 5a bis 5c wird nun ein Beispiel eines erfindungsgemäßen Lamellenblocks 100 für eine Kalibriereinrichtung weiter beschrieben.

Figur 5a zeigt eine 3D-Ansicht des Lamellenblocks 100. Der Lamellenblock 100 umfasst eine Trägerstruktur (Rückenstruktur) 120 und eine Lamellenstruktur 110. Die Trägerstruktur 120 fungiert als Träger für die Lamellenstruktur 110.

Der Lamellenblock 100 kann ferner eine Kopplungseinrichtung aufweisen (in Figur 5a nicht dargestellt). Die Kopplungseinrichtung ist zur Kopplung mit einer Betätigungseinrichtung einer Kalibriereinrichtung vorgesehen. Die Betätigungseinrichtung ist in der Figur 5a ebenso nicht zu sehen. Gemäß einer Implementierung kann die Kopplungseinrichtung zwei oder mehrere voneinander beabstandet angeordnete Gewindebohrungen aufweisen. Die Gewindebohrungen können in der Trägerstruktur integriert ausgebildet sein.

Die Trägerstruktur 120 ist als massiver Körper ausgebildet. Die Trägerstruktur 120 weist im Querschnitt senkrecht zur Längsrichtung L ein rechteckförmiges Profil auf. Anstelle der massiven Ausbildung kann der Lamellenblock 100 auch mehrere Trägerstangen aufweisen, an denen die Lamellen 112 befestigt sind (Vgl. Figur 1).

Im Folgenden wird nun die Lamellenstruktur 110 des erfindungsgemäßen Lamellenblocks 100 weiter beschrieben. Die Lamellenstruktur 110 umfasst eine Vielzahl von Lamellen 112, die in Längsrichtung L der Trägerstruktur 120 voneinander beanstandet angeordnet sind. Benachbarte Lamellen 112 sind durch entsprechende Nuten 114 voneinander getrennt. In der in Figur 5a dargestellten Ausführungsform weist jede Lamelle 112 ein im Querschnitt zur Längsrichtung *L* dreiecksförmiges Profil auf.

An seiner der Trägerstruktur 120 abgewandten Seite (Innenseite) weist jede Lamelle 112 eine Kontaktfläche 113 auf. Die Kontaktflächen 113 sind durch jeweilige seitliche Lamellenenden 116 jeder Lamelle 112 in ihrer Länge (Ausdehnung quer zur Längsrichtung L) definiert. Die Kontaktflächen 113 der Lamellen 112 sind jene Flächen der Lamellenstruktur 110, die bei einer Kalibrierung mit der Außenfläche des zu kalibrierenden Profils in Kontakt treten und diese formen. Die Kontaktflächen 113 können vorzugsweise mit der Kontur des zu kalibrierenden Profils korrespondieren. Beispielsweise können die Kontaktflächen 113 leicht gekrümmt ausgebildet sein. Die Krümmung der Kontaktflächen 113 kann auf die Außenfläche (Außenwand) eines Rohrprofils abgestimmt sein. Je nach Anwendung können die Kontaktflächen 113 der Lamellen 112 auch flach sein oder eine anderweitige Krümmung aufweisen. Ebenso kann der Lamellenblock 100 auch eine Lamellenform aufweisen, die von dem hier beschriebenen dreiecksförmigen Querschnittsprofil abweichen kann.

Im Folgenden wird die Anordnung der einzelnen Lamellen 112 innerhalb der Lamellenstruktur 110 weiter beschrieben. Die Lamellen 112 sind seitlich zueinander versetzt angeordnet. Dadurch ergibt sich in Längsrichtung L der Trägerstruktur 120 eine gefächerte Anordnung der Lamellen 112. Wenn der Lamellenblock in eine Kalibriereinrichtung eingebaut ist, entspricht die Längsrichtung L der Trägerstruktur 120 der Extrusionsrichtung (der Vorschubrichtung) des zu kalibrierenden (extrudierten) Profils. Durch den seitlichen Versatz der Lamellen 112 zueinander wird erreicht, dass die Lamellenenden 116 der Lamellen 112 eines Lamellenblocks 100 z.B. schräg bezüglich der Vorschubrichtung des Profils verlaufen.

Figur 5b zeigt eine Normalansicht auf die Innenseite des Lamellenblocks 100 gemäß Figur 5a. Anhand von Figur 5b wird nun der Versatz der Lamellen 112 zueinander nochmals genauer beschrieben. Wie oben beschrieben, weist jede Lamelle 112 an der Innenseite des Lamellenblocks 100 eine Kontaktfläche 113 auf. Die Kontaktflächen 113 der Lamellen 112 können jeweils gleich lang (d.h. quer zur Längsrichtung L der Trägerstruktur ausgedehnt) sein. Alternativ können die Kontaktflächen 113 auch unterschiedliche Längen aufweisen (jeweils begrenzt durch die jeweiligen Lamellenenden 116). Die Lamellen 112 können derart zueinander verschoben sein, dass die Kontaktflächen 113 bezüglich der Längsrichtung L der Trägerstruktur 120 einen diagonalen bzw. schrägen Verlauf beschreiben. Analog verlaufen auch die jeweiligen Lamellenenden 116 diagonal bzw. schräg bezüglich der Längsrichtung L der Trägerstruktur 120.

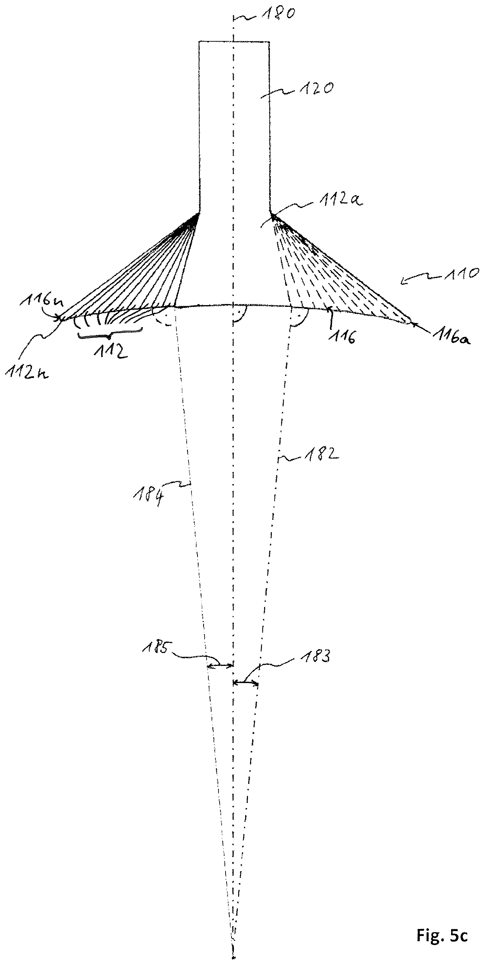

Figur 5c zeigt eine Projektion des in den Figuren 5a und 5b dargestellten Lamellenblocks 100 quer zur Längsrichtung L der Trägerstruktur 120 des Lamellenblocks 100. Aus der in Figur 5c dargestellten Perspektive wird der Versatz bzw. die Fächerung der Lamellen 112 zueinander ersichtlich. An seinem einen (stirnseitigen) Ende weist der Lamellenblock 100 eine erste Lamelle 112a und an seinem anderen (rückseitigen) Ende eine letzte Lamelle 112n auf. Dazwischen weist der Lamellenblock 100 eine Vielzahl weiterer Lamellen 112 auf. Es sei darauf hingewiesen, dass die Anzahl der Lamellen 112 in Figur 5c lediglich exemplarisch gewählt ist und aus Gründen der vereinfachten Darstellung nicht der Anzahl der Lamellen 112 gemäß den Figuren 5a und 5b entspricht. Die Lamelle 112a, sowie wenigstens einige weitere der Lamellen 112, 112n weisen einen asymmetrischen Querschnitt bezüglich einer Symmetrieebene 180 des Lamellenblocks 100 auf. Die Symmetrieebene 180 des Lamellenblocks 100 verläuft senkrecht zu den Kontaktflächen 113 der Lamellen 112 und in Längsrichtung L mittig durch die Trägerstruktur 120. Durch die geometrische Ausgestaltung der Lamellen 112a, 112, 112n ergibt sich eine Fächerung der Lamellen 112a, 112, 112n bezüglich der Längsrichtung L der Trägerstruktur 120.

Gemäß der in den Figuren 5a bis 5c dargestellten Variante ist der Betrag des seitlichen Versatzes der ersten Lamelle 112a gleich dem Betrag des Versatzes der letzten Lamelle 112n des Lamellenblocks 100. Der seitliche Versatz lässt sich durch einen Winkel 183, 185 zwischen Flächennormalen 182, 184 der Kontaktfläche der jeweiligen Lamelle 112a, 112n und der Symmetrieebene 180 bestimmen. Die Flächennormalen 182, 184 stehen jeweils mittig auf der jeweiligen Kontaktfläche.

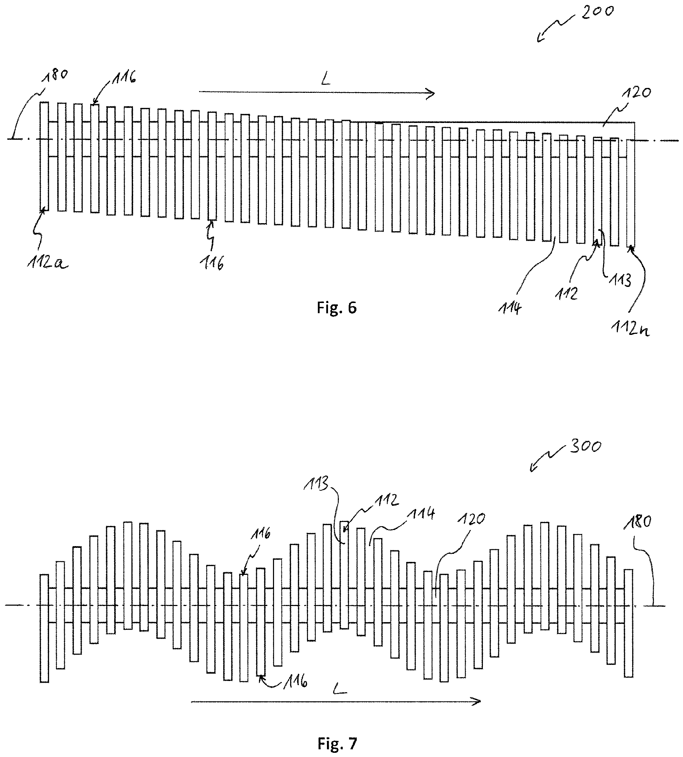

Im Folgenden werden im Zusammenhang mit den Figuren 6 und 7 weitere Beispiele von erfindungsgemäßen Lamellenblöcken näher beschrieben.

Figur 6 zeigt eine Normalansicht der Innenseite eines erfindungsgemäßen Lamellenblocks 200. Wie der Lamellenblock 100 gemäß den Figuren 5a bis 5c, weist der Lamellenblock 200 eine Trägerstruktur 120 und eine Lamellenstruktur 110 auf. Die Lamellenstruktur 110 umfasst eine Vielzahl von Lamellen 112, die durch Nuten 114 voneinander beabstandet sind. Es wird auf die entsprechende Beschreibung oben verwiesen. Zur Vereinfachung wurden jene Merkmale des Lamellenblocks 200, die strukturell und funktionell ähnlich oder identisch mit Merkmalen des Lamellenblocks 100 sind, mit denselben Bezugszeichen versehen. Die Geometrie der Kontaktflächen 113 des Lamellenblocks 200 kann gleich der Geometrie der Kontaktflächen 113 des Lamellenblocks 100 sein. Alternativ kann sich die Geometrie der Kontaktflächen 113 des Lamellenblocks 200 von der Kontaktflächengeometrie des Lamellenblocks 100 unterscheiden.

Der Lamellenblock 200 unterscheidet sich von dem Lamellenblock 100 in der Anordnung der Lamellen 112 bezüglich der Trägerstruktur 120. Im Gegensatz zu dem Lamellenblock 100 ist der Betrag des seitlichen Versatzes der ersten Lamelle 112a ungleich dem Betrag des seitlichen Versatzes der letzten Lamelle 112n. Analog zu der Variante gemäß den Figuren 5a bis 5c verlaufen auch die jeweiligen Lamellenenden 116 des Lamellenblocks 200 schräg bezüglich der Längsrichtung L der Trägerstruktur 120.

Figur 7 zeigt ein weiteres Beispiel eines erfindungsgemäßen Lamellenblocks 300. Zur Vereinfachung wurden wiederum jene Merkmale des Lamellenblocks 300, die strukturell und funktionell ähnlich oder identisch mit Merkmalen des Lamellenblocks 100 sind, mit denselben Bezugszeichen versehen. Es sei auf die obige Beschreibung verwiesen. Der Lamellenblock 300 unterscheidet sich von den Lamellenblöcken 100 und 200 wiederum durch die Ausprägung des Versatzes der Lamellen 112 zueinander. So weisen die Kontaktflächen 113 des Lamellenblocks 300, und in analoger Weise die Lamellenenden 116, in Längsrichtung L der Trägerstruktur 120 einen wellenförmigen Verlauf auf.

Es versteht sich, dass die in den Figuren 5a bis 5c, sowie in den Figuren 6 und 7 gezeigten Lamellenblöcke 100, 200, 300 exemplarisch sind. Andere Varianten in der geometrischen Ausgestaltung der Lamellen 112 und/oder in der Anordnung der Lamellen an der Trägerstruktur 120 sind ebenso denkbar. Insbesondere können die Kontaktflächen 113 bzw. die Lamellenenden 116 eines Lamellenblocks gemäß der vorliegenden Erfindung auch einen zickzackförmigen oder anderweitigen Verlauf beschreiben.

Die Trägerstruktur eines jeden Lamellenblocks 100, 200, 300 einer Kalibriereinrichtung kann parallel zu einer Mittelachse der Kalibriereinrichtung (bzw. in Vorschubrichtung des Profils) verlaufen. Die Anordnung erfindungsgemäßer Lamellenblöcke 100, 200, 300 in einer Kalibriereinrichtung zueinander entspricht im Wesentlichen der Anordnung wie sie in Figur 3 im Zusammenhang mit dem Stand der Technik beschrieben ist. Im Unterschied zum Stand der Technik verlaufen die Lamellenenden der Lamellen eines jeden Lamellenblocks einer Kalibriereinrichtung gemäß der vorliegenden Erfindung jedoch nicht geradlinig längs zur Vorschubrichtung des zu kalibrierenden Profils. Gemäß der vorliegenden Erfindung sind die Lamellen eines jeden Lamellenblocks einer Kalibriereinrichtung nämlich derart zueinander versetzt angeordnet, dass die Lamellenenden der Lamellen jedes der Lamellenblöcke 100, 200, 300 vorzugsweise schräg und/oder Wellen- bzw. Zickzackbahnen beschreibend zur Mittelachse der Kalibriereinrichtung verlaufen. Somit kann gewährleistet werden, dass die Spuren, die die Lamellenenden auf der Außenfläche (Außenwand) des zu kalibrierenden Profils erzeugen, beim Vorschub durch die Kalibrieröffnung der Kalibriereinrichtung glattgestrichen bzw. verwischt werden. Eine Rotation des Kalibrierkorbes ist dafür nicht erforderlich.

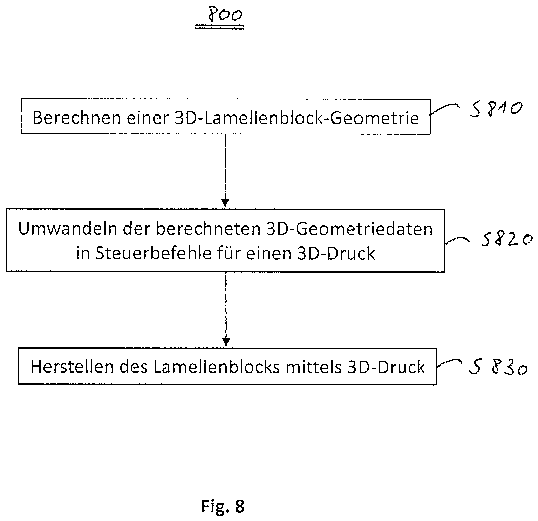

Wie ferner aus den Figuren 5a bis 5c, sowie 6 und 7 ersichtlich wird, ist die Trägerstruktur 120 der Lamellenblöcke 100, 200, 300 zusammen mit der Lamellenstruktur 110 einstückig ausgebildet. Zur Erreichung der oben beschriebenen Geometrie der Lamellenblöcke 100, 200, 300 kann ein generatives bzw. additives Fertigungsverfahren zum Einsatz kommen. Ein derartiges Herstellungsverfahren 800 ist in Figur 8 gezeigt und wird im Folgenden weiter beschrieben.

Demnach kommt ein 3D-Druckverfahren zum Einsatz. Hierbei werden in einem ersten Schritt S810 auf der Grundlage der oben beschriebenen Simulation, welche eine geeignete Topologie der Lamellenstruktur 110 simuliert, 3D-Geometriedaten (CAD-Daten) berechnet. Die 3D-Geometriedaten beschreiben die Geometrie des Lamellenblocks 100, 200, 300 (insbesondere die versetzte Lamellenanordnung). In einem zweiten Schritt S820 werden die berechneten 3D-Geometriedaten in Steuerbefehle für einen 3D-Druck umgewandelt. Basierend auf den erzeugten Steuerbefehlen wird dann der Lamellenblock 100, 200, 300 in einem dritten Schritt S830 mittels eines 3D-Druckverfahrens (z.B. Lasersintern, Laserschmelzen) schichtweise aufgebaut. Als Werkstoff für den 3D-Druck kann ein metallischer Werkstoff oder ein Polymerwerkstoff zum Einsatz kommen.

Alternativ zur Herstellung mittels 3D-Druck ist auch denkbar, den Lamellenblock 100, 200, 300 aus einem Werkstück (beispielsweise durch Fräsen, Bohren, Schneiden) oder mittels eines Gussverfahrens herzustellen. Gemäß einer weiteren Alternative können die Lamellen 112 eines erfindungsgemäßen Lamellenblocks 100, 200, 300 separat hergestellt werden und analog zu der in Figur 1 dargestellten bekannten Ausführung entlang von Trägerstangen aufgefädelt werden, um den Lamellenblock zu bilden.

## Patentansprüche

1. Lamellenblock (100, 200, 300) für eine Kalibriereinrichtung zur Kalibrierung eines extrudierten Profils, wobei der Lamellenblock (100, 200, 300) eine Trägerstruktur (120) und eine Lamellenstruktur (110) umfasst, und wobei die Lamellenstruktur (110) eine Vielzahl von Lamellen (112) aufweist, die durch Nuten (114) voneinander beabstandet und in Längsrichtung (L) der Trägerstruktur (120) angeordnet sind, **dadurch gekennzeichnet, dass** benachbarte Lamellen (112) in Längsrichtung (L) seitlich zueinander versetzt angeordnet sind, wobei jede Lamelle (112) an einer Innenseite des Lamellenblocks (100, 200, 300) eine Kontaktfläche (113) aufweist, wobei durch den Versatz der Lamellen (112) zueinander die Kontaktflächen (113) der Lamellen (112) bezüglich der Längsrichtung (L) der Trägerstruktur (120) einen diagonalen oder wellenförmigen Verlauf beschreiben.

2. Lamellenblock (100, 200, 300) nach Anspruch 1, **dadurch gekennzeichnet, dass** jede Lamelle (112) quer zur Längsrichtung (L) der Trägerstruktur (120) einen Querschnitt aufweist, wobei die Querschnitte wenigstens einiger der Lamellen (112) in sich asymmetrisch sind.

3. Lamellenblock (100, 200, 300) nach einem der vorhergehenden Ansprüche, **dadurch gekennzeichnet, dass** die Längsrichtung (L) der Trägerstruktur (120) in einem in die Kalibriereinrichtung eingebauten Zustand des Lamellenblocks (100, 200, 300) der Vorschubrichtung des extrudierten Profils entspricht.

4. Lamellenblock (100, 200, 300) nach einem der vorhergehenden Ansprüche, wobei die Trägerstruktur (120) und die Lamellen (112) aus demselben Material oder aus verschiedenen Materialien gefertigt sind.

5. Lamellenblock (100, 200, 300) nach einem der vorhergehenden Ansprüche, wobei der Lamellenblock (100, 200, 300) einstückig ausgebildet ist.

6. Lamellenblock (100, 200, 300) nach einem der vorhergehenden Ansprüche, wobei der Lamellenblock (100, 200, 300) mittels 3D-Druck bzw. mittels eines additiven Fertigungsverfahrens hergestellt ist.

7. Kalibriereinrichtung zur Kalibrierung von extrudierten Profilen, umfassend eine Vielzahl von Lamellenblöcken (100, 200, 300) gemäß einem der Ansprüche 1 bis 6, wobei die Lamellenblöcke (100, 200, 300) zur Bildung einer Kalibrieröffnung zueinander angeordnet sind.

8. Kalibriereinrichtung nach Anspruch 7, wobei die Kalibriereinrichtung eine Vielzahl von Betätigungseinrichtungen umfasst, wobei jede Betätigungseinrichtung jeweils mit einem Lamellenblock (100, 200, 300) gekoppelt ist, um einen jeden Lamellenblock (100, 200, 300) individuell zu betätigen.

9. Verfahren (800) zum Herstellen eines Lamellenblocks (100, 200, 300) gemäß einem der Ansprüche 1 bis 6, umfassend den Schritt (S830) des Herstellens des Lamellenblocks (100, 200, 300) mittels 3D-Druck bzw. mittels additiver Fertigung.

10. Verfahren nach Anspruch 9, ferner umfassend den Schritt (S810) des Berechnens einer 3D-Lamellenblock-Geometrie, und den Schritt (S820) des Umwandelns der berechneten 3D-Geometriedaten in entsprechende Steuerbefehle für den 3D-Druck bzw. die additive Fertigung.

11. Verfahren zum Herstellen eines Lamellenblocks (100, 200, 300), die Schritte umfassend:
- Erstellen eines Datensatzes, welcher den Lamellenblock (100, 200, 300) nach einem der Ansprüche 1 bis 6 abbildet;
- Speichern des Datensatzes auf einer Speichervorrichtung oder einem Server; und
- Eingeben des Datensatzes in eine Verarbeitungsvorrichtung oder einen Computer, welche/r eine Vorrichtung zur additiven Fertigung derart ansteuert, dass diese den im Datensatz abgebildeten Lamellenblock (100, 200, 300) fertigt.

12. Computerprogramm, umfassend Datensätze, die bei dem Einlesen der Datensätze durch eine Verarbeitungsvorrichtung oder einen Computer diese/n veranlasst, eine Vorrichtung zur additiven Fertigung derart anzusteuern, dass die Vorrichtung zur additiven Fertigung ein Lamellenblock (100, 200, 300) mit den Merkmalen nach einem der Ansprüche 1 bis 6 fertigt.

13. Computerlesbarer Datenträger, auf dem das Computerprogramm nach Anspruch 12 gespeichert ist.

## Claims

1. A lamella block (100, 200, 300) for a calibrating device for calibrating an extruded profile, wherein the lamella block (100, 200, 300) comprises a carrier structure (120) and a lamella structure (110), and wherein the lamella structure (110) has a plurality of lamellae (112), which are spaced apart from each other by grooves (114) and arranged in a longitudinal direction (L) of the carrier structure (120), **characterized in that** neighboring lamellae (112) are arranged laterally offset to each other in the longitudinal direction (L), wherein each lamella (112) has a contact surface (113) on an interior side of the lamella block (100, 200, 300), wherein offsetting the lamellae (112) relative to each other causes the contact surfaces (113) of the lamellae (112) to describe a diagonal or wavy progression in relation to the longitudinal direction (L) of the carrier structure (120).

2. The lamella block (100, 200, 300) according to claim 1, **characterized in that** each lamella (112) has a cross section transverse to the longitudinal direction (L) of the carrier structure (120), wherein the cross sections of at least some of the lamellae (112) are inherently symmetrical.

3. The lamella block (100, 200, 300) according to one of the preceding claims, **characterized in that**, in a state where the lamella block (100, 200, 300) is built into a calibrating device, the longitudinal direction (L) of the carrier structure (120) corresponds to the feed direction of the extruded profile.

4. The lamella block (100, 200, 300) according to one of the preceding claims, wherein the carrier structure (120) and the lamellae (112) are fabricated out of the same material or out of different materials.

5. The lamella block (100, 200, 300) according to one of the preceding claims, wherein the lamella block (100, 200, 300) is integrally designed.

6. The lamella block (100, 200, 300) according to one of the preceding claims, wherein the lamella block (100, 200, 300) is manufactured by means of 3D printing or by means of an additive manufacturing process.

7. A calibrating device for calibrating extruded profiles, comprising a plurality of lamella blocks (100, 200, 300) according to one of claims 1 to 6, wherein the lamella blocks (100, 200, 300) are arranged relative to each other to form a calibrating opening.

8. The calibrating device according to claim 7, wherein the calibrating device comprises a plurality of activating devices, wherein each activating device is coupled with a respective lamella block (100, 200, 300), so as to individually activate each lamella block (100, 200, 300).

9. A method (800) for manufacturing a lamella block (100, 200, 300) according to one of claims 1 to 6, involving the step (S830) of manufacturing the lamella block (100, 200, 300) by means of 3D printing or by means of additive manufacturing.

10. The method according to claim 9, further involving the step (S810) of calculating 3D lamella block geometry, and the step (S820) of converting the calculated 3D geometry data into corresponding control commands for 3D printing or additive manufacturing.

11. A method for manufacturing a lamella block (100, 200, 300), involving the following steps:
- Generating a dataset, which images the lamella block (100, 200, 300) according to one of claims 1 to 6;
- Storing the dataset on a storage device or a server; and
- Inputting the dataset into a processing device or a computer, which actuates an additive manufacturing device so that the latter fabricates the lamella block (100, 200, 300) imaged in the dataset.

12. A computer program, comprising datasets, which while the datasets are being read in by a processing device or a computer, prompts the latter to actuate an additive manufacturing device in such a way that the additive manufacturing device fabricates the lamella block (100, 200, 300) with the features according to one of claims 1 to 6.

13. A computer-readable data carrier, which stores the computer program according to claim 12.

## Revendications

1. Bloc de lamelles (100, 200, 300) pour un dispositif d'étalonnage pour étalonner un profilé extrudé, dans lequel le bloc de lamelles (100, 200, 300) comprend une structure porteuse (120) et une structure de lamelles (110), et dans lequel la structure de lamelles (110) présente une pluralité de lamelles (112) qui sont éloignées l'une de l'autre par des rainures (114) et sont disposées dans le sens longitudinal (L) de la structure porteuse (120), **caractérisé en ce que** des lamelles (112) adjacentes sont disposées décalées latéralement entre elles dans le sens longitudinal (L), dans lequel chaque lamelle (112) présente une face de contact (113) sur une face intérieure du bloc de lamelles (100, 200, 300), dans lequel du fait du décalage des lamelles (112) entre elles, les faces de contact (113) des lamelles (112) décrivent un tracé en diagonale ou ondulé par rapport au sens longitudinal (L) de la structure porteuse (120).

2. Bloc de lamelles (100, 200, 300) selon la revendication 1, **caractérisé en ce que** chaque lamelle (112) présente une section transversale au sens longitudinal (L) de la structure porteuse (120), dans lequel les sections d'au moins quelques-unes des lamelles (112) sont asymétriques en soi.

3. Bloc de lamelles (100, 200, 300) selon l'une des revendications précédentes, **caractérisé en ce que** le sens longitudinal (L) de la structure porteuse (120) correspond au sens d'avancement du profilé extrudé, dans un état du bloc de lamelles (100, 200, 300) monté dans le dispositif d'étalonnage.

4. Bloc de lamelles (100, 200, 300) selon l'une des revendications précédentes, dans lequel la structure porteuse (120) et les lamelles (112) sont fabriquées dans le même matériau ou dans des matériaux différents.

5. Bloc de lamelles (100, 200, 300) selon l'une des revendications précédentes, dans lequel le bloc de lamelles (100, 200, 300) est fabriqué d'un seul tenant.

6. Bloc de lamelles (100, 200, 300) selon l'une des revendications précédentes, **caractérisé en ce que** le bloc de lamelles (100, 200, 300) est fabriqué par procédé d'impression 3D, respectivement par un procédé de fabrication additive.

7. Dispositif d'étalonnage pour étalonner des profilés extrudés, comprenant une pluralité de blocs de lamelles (100, 200, 300) selon l'une des revendications 1 à 6, dans lequel les blocs de lamelles (100, 200, 300) sont disposés les uns par rapport aux autres pour former une ouverture d'étalonnage.

8. Dispositif d'étalonnage selon la revendication 7, dans lequel le dispositif d'étalonnage comprend une pluralité de dispositifs d'actionnement, dans lequel chaque dispositif d'actionnement est couplé respectivement à un bloc de lamelles (100, 200, 300) pour actionner un bloc de lamelles (100, 200, 300) respectif individuellement.

9. Procédé (800) de fabrication d'un bloc de lamelles (100, 200, 300) selon l'une des revendications 1 à 6, comprenant l'étape (S830) de fabrication du bloc de lamelles (100, 200, 300) par impression 3D, respectivement, par fabrication additive.

10. Procédé selon la revendication 9, comprenant en outre l'étape (S810) de calcul d'une géométrie 3D de bloc de lamelles et l'étape (S820) de conversion des données de géométrie 3D calculées en commandes correspondantes pour l'impression 3D, respectivement, la fabrication additive.

11. Procédé de fabrication d'un bloc de lamelles (100, 200, 300) qui comprend les étapes :
- de créer un jeu de données qui représente le bloc de lamelles (100, 200, 300) selon l'une des revendications 1 à 6 ;
- d'enregistrer le jeu de données sur un dispositif de mémoire ou un serveur ; et
- de saisir le jeu de données dans un dispositif de traitement ou un ordinateur qui commande un dispositif de fabrication additive de façon à ce que celui-ci fabrique le bloc de lamelles (100, 200, 300) représenté dans le jeu de données.

12. Programme informatique comprenant des jeux de données qui, lorsque les jeux de données sont mis en mémoire par un dispositif de traitement ou un ordinateur, fait que celui-ci commande un dispositif de fabrication additive de façon à ce que le dispositif de fabrication additive fabrique un bloc de lamelles (100, 200, 300) ayant les caractéristiques selon l'une des revendications 1 à 6.

13. Support de données pouvant être lu sur ordinateur, sur lequel le programme informatique selon la revendication 12 est enregistré.
